# EUROPEAN PATENT SPECIFICATION

(11) **EP 3 729 103 B1**
(45) Date of publication and mention of the grant of the patent: **05.07.2023**
(21) Application number: 17825509.7
(22) Date of filing: 20.12.2017
(51) Int. Cl.: G01N 35/00

(54) **A PHOTOMETER ARRANGEMENT FOR DETERMINING AN ANALYTE IN A LIQUID SAMPLE AND A METHOD FOR DETERMINING A CONCENTRATION OF AN ANALYTE IN A LIQUID SAMPLE**
PHOTOMETERANORDNUNG ZUR BESTIMMUNG EINES ANALYTEN IN EINER FLÜSSIGEN PROBE UND VERFAHREN ZUR BESTIMMUNG EINER KONZENTRATION EINES ANALYTEN IN EINER FLÜSSIGEN PROBE
AGENCEMENT DE PHOTOMÈTRE PERMETTANT LA DÉTERMINATION D'UN ANALYTE DANS UN ÉCHANTILLON LIQUIDE ET PROCÉDÉ DE DÉTERMINATION D'UNE CONCENTRATION D'UN ANALYTE DANS UN ÉCHANTILLON LIQUIDE

(43) Date of publication of application: 28.10.2020
(73) Proprietor: Hach Lange GmbH, 14163 Berlin (DE)
(72) Inventor: RUDDE, Heinz, 41836 Hückelhoven (DE); HAHN, Markus, 47906 Kempen (DE)
(74) Representative: terpatent Patentanwälte ter Smitten Eberlein-Van Hoof Rütten Daubert
(86) International application number: PCT/EP2017/083883
(87) International publication number: WO 2019/120522

(56) References cited:
- EP-A1- 2 618 159
- EP-A1- 2 813 839
- WO-A1-2013/050063
- C Berding ET AL: "Procedures of Standardization of Clinical Chemistry and Immuno Assays from Roche Diagnostics", , 31 August 2010 (2010-08-31), XP055506054, Retrieved from the Internet: URL:http://www.roche-diagnostics.ch/conten t/dam/corporate/roche-dia_ch/documents/bro schueren/professional_diagnostics/serumarb eitsplatz/control/EN_Procedures-Standardiz ation-CC-I-Assays.pdf [retrieved on 2018-09-11]

## Description

The present invention refers to a photometer arrangement for determining an analyte in a liquid sample and to a method for determining a concentration of an analyte in a liquid sample.

WO 2013/050063 A1 discloses a relatively simple photometer arrangement.

US 2012/0 244 628 A1 discloses a photometer arrangement with a cuvette comprising a reagent and with an analyzer device comprising a photometer. After a liquid sample, typically a water sample, has been applied into the cuvette, the reagent reacts with the analyte in the liquid sample in a color-changing way. The cuvette is inserted into a photometer chamber of the analyzer device so that the photometer can provide a photometric measurement and generates a photometric raw measurement value. The photometric raw measurement value is corrected with static batch-specific calibration data.

Every cuvette is provided with a barcode for identifying the reagent batch identification of the reagent in the cuvette. Since the two-dimensional barcode can memorize only a relatively small amount of information, the corresponding batch-specific calibration data is memorized in a RFID chip at the cuvette package and must to be transferred from the RFID chip to the photometer controller. The RFID chip can also have memorized the production data and a lifetime period or a final lifetime date. If the lifetime of the reagent has been expired at the day of a photometric measurement, the user is informed correspondingly and/or the measurement process is stopped.

The reagent producer guarantees for the reagent's lifetime period that the color changing reaction of the reagent remains stable within a range of, for example, 3% or 5%. A typical lifetime period of a cuvette reagent is 12 months which is, depending on the type of reagent, already difficult to guarantee for the reagent producer. Beside of that, the real lifetime period of the reagent can also be batch-specific because the raw chemistry of the final reagent product can be of different lifetime quality and lifetime behavior. The same can be the case for the absorption of the cuvette body.

The cuvettes are typically sold in packages of 25 or 50 cuvettes. If the user needs only one single cuvette per month, the lifetime period of the last 13 or 38 cuvettes of that package has been expired before these cuvettes are needed.

It is an object of the invention to increase the lifetime period of the reagent containers of a photometer arrangement.

This object is solved with a photometer arrangement with the features of apparatus claim 1 or with a method with the features of method claim 5.

According to main claim 1, the photometer arrangement according to the invention is provided with an analyzer device, a reagent container, a reagent ageing database and an evaluation device.

The reagent container comprises a reagent and is also provided with a machine-readable reagent identifier. The reagent container can be a cuvette, a measurement chip with a fluidic flow path or a cartridge for providing numerous measurement actions. However, every kind of reagent container comprises a liquid or a solid regent. The container body can be of plastic or of glass.

The reagent identifier can be relatively simple. The reagent identity includes information about the type of reagent and a batch identification or lot identification of the reagent. The reagent identifier can be, for example, a relatively simple two-dimensional or three-dimensional barcode. This simple reagent container reagent identifier is very cost-effective.

The analyzer device comprises a photometer for providing a photometric raw measurement value. The photometer typically, but not necessarily, is a transmissive photometer and thereby provides a transmission or an absorption measurement value. The photometer in the sense of the present invention can be any optical measurement device, and can be, for example, a turbidimeter as well.

The analyzer device is provided with a reagent identifier reader for reading the reagent identifier at the reagent container and for thereby providing the reagent identity. The reagent identity includes information about the type of the reagent container reagent and a batch identification or lot identification, and is linked to the raw measurement value.

The analyzer device is provided with a photometer controller controlling the photometer. A time stamp generator is provided for providing a measurement date. The time stamp generator can be located at the analyzer device, at the evaluation device or at the database. When the photometer provides a photometric raw measurement value, the photometric raw measurement value is linked to the measurement date provided by the time stamp generator.

The reagent ageing database is preferably provided with reagent-identicy-specific and age-specific ageing correction factors for each individual reagent type and for each individual reagent lot/batch, and can also be provided with the respective reagent production date. The reagent ageing database can, for example, comprise month-wise agent correction factors, i.e. a correction factor for every month of the reagent age during the lifetime of the reagent.

The evaluation device temporarily or constantly has a data connection with the analyzer device and with the reagent ageing database. After the photometric measurement value, the measurement date and the reagent identity have been linked together, the evaluation device sends the reagent identity to the reagent ageing database, and requests and downloads the corresponding ageing correction factor or factors. The ageing correction factor can be the concrete ageing correction factor for the calculated age of reagent or can be a complete spreadsheet of ageing correction factors for the corresponding reagent batch/lot for different or all possible reagent ages.

Finally, the evaluation device calculates the true measurement value by correcting the raw measurement value with the reagent's age-corresponding ageing correction factor. Since the photometric raw measurement value is corrected with the ageing correction factor of the used reagent, the objective precision of the true measurement value is significantly increased in particular, if the agent is not young anymore. The older the reagent is in the moment of the photometric measurement, the greater is the accuracy effect of the ageing correction. As a result, the maximum lifetime of the reagent, for example the 3%- or 5%-lifetime, can significantly be increased to, for example, 24 months or even longer.

Preferably, the photometer controller is provided with a photometer type identification and the reagent-specific ageing correction factors are memorized in the reagent ageing database photometer-type-specifically.

Photometers of analyzer devices can be of very different optical quality. The optical accuracy of the light source and of the light receiver depend on the general device quality. A low-cost analyzer device can be provided, for example, with a photometer light source which does not emit light with the maximum intensity precisely at the maximum absorption wavelength of the reagent, whereas a high quality analyzer device could be provided with a spectral photometer which can provide the photometric measurement precisely at every required wavelength. As a result of the different qualities of the photometer of analyzer devices, also the reagent-specific ageing correction factors can significantly depend on the photometer type. Using photometer-type specific ageing correction factors can significantly increase the lifetime of the reagent, for example the 3%- or the 5%- lifetime.

According to a preferred embodiment, the reagent ageing database is memorized at an ageing data server being located remote from the analyzer device and the evaluation device. More preferably, the reagent ageing database is located at the reagent production site.

After a batch/lot of reagent containers comprising the same reagent has been produced, these reagent containers are successively sold to customers. Since the ageing correction factors of the batch/lot are not known right after the batch/lot production, it is not possible to provide the ageing correction factors to the customer right after the reagent production. The reagent specific ageing correction factors can only be determined with ageing tests under real environmental conditions or under accelerating conditions. However, it takes many months to provide the individual ageing correction factors for the full reagent lifetime.

These ageing correction factors are available at the reagent ageing database which can be located at the reagent production site so that the ageing correction factors can be downloaded, for example via an internet data connection, to the evaluation device. There is no need anymore to provide the reagent-specific ageing correction factors physically together with the reagent containers directly to the customer.

Preferably, the evaluation device is provided separately from the analyzer device. The evaluation device can be, for example, a tablet computer or a smart phone. The data connection between the evaluation device and the analyzer device can be any kind of data connection by wire or wireless. In particular, wireless connections are suitable, for example Bluetooth, NFC Wi-Fi etc.

According to the independent method claim for determining the concentration of an analyte in a liquid sample with a photometer arrangement of one of the apparatus claims, the following method steps are provided:
First, a liquid sample, typically a water sample, is provided into the reagent container so that the liquid sample dissolves the dry reagent, and the analyte of the liquid sample reacts with the reagent in a color-changing manner.

The reagent container with the liquid sample is applied to the analyzer device. The analyzer device can be provided with a photometer chamber so that the reagent container is inserted into the photometer chamber. If the analyzer device is provided with a chamber lid, the chamber lid is closed.

The photometer optically measures the transmission, absorption or turbidity of the reagent container containing the liquid sample and generates a raw measurement value. The reagent identifier reader detects the information provided at the reagent identifier and thereby determines and reads the reagent identity which is linked to the raw measurement value. The time stamp generator generates a measurement date which is also linked to the raw measurement value.

The photometer controller sends the reagent identity to the evaluation device which sends the reagent identity to reagent ageing database. The evaluation device downloads the corresponding ageing correction factor to the evaluation device. The evaluation device then determines the reagent age on the basis of the difference between the reagent production date and the measurement date.

Finally, the evaluation device determines the true measurement value by correcting the raw measurement value with the corresponding age-specific ageing correction factor.

It should be noted that the ageing correction factor generally can be a simple single factor which is elected from a lookup table dependent on the reagent age at the measurement date or the ageing correction factor can be alternatively a mathematical term including a variable for the measurement date or the reagent age.

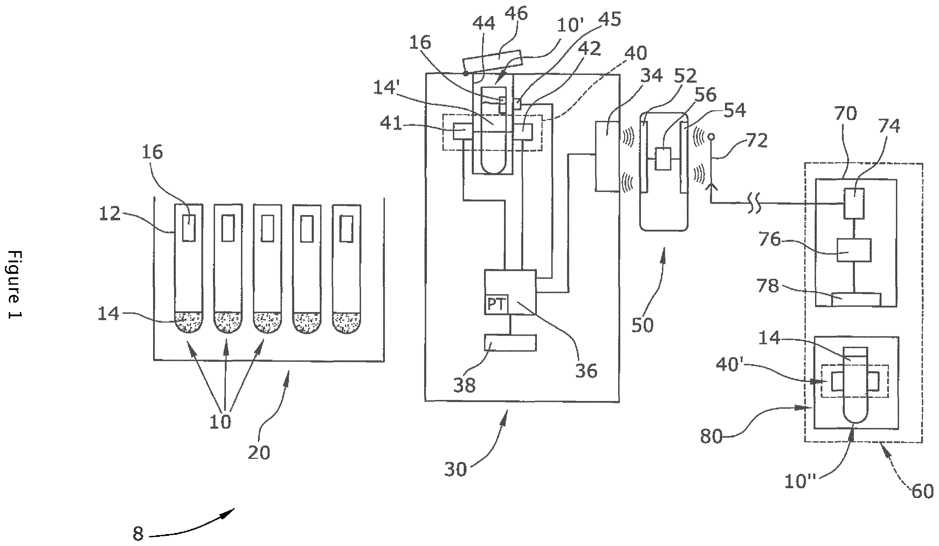

One example of the invention is described with reference to the enclosed drawing.

The Figure schematically shows a photometer arrangement according to the invention.

The figure shows schematically a photometer arrangement 8 comprising a reagent container package 20 comprising reagent containers 10, an analyzer device 30, a separate evaluation device 50 and a remote reagent production site 60 with a reagent ageing database 76. The reagent container 10 is a cuvette

The reagent container package 20 comprises numerous reagent containers 10, for example 25. reagent containers. Every reagent container 10 is provided with a reagent container body 12 of transparent glass and contains a dry or liquid reagent 14 at the reagent container bottom. The reagent container body 12 is provided with an optical reagent identifier 16 which is preferably a two-dimensional or a three-dimensional barcode printed on a paper label which is glued to the outside of the reagent container body 12.

The analyzer device 30 is provided with a photometer 40 comprising a light source 41 and a light receiver 42, a reagent identifier reader 45, a photometer controller 36, a time stamp generator 38 and a wireless data transfer module 34. The analyzer device 30 is also provided with a photometer chamber 44 which can be closed by a pivotable chamber lid 46 .

The photometer controller 36 controls the light source 41 and the light receiver 42 of the photometer 40, and is connected to the time stamp generator 38 and to the wireless data transfer module 34.

The separate evaluation device 50 is typically a tablet computer or a smart phone and is provided with a wireless data transfer module 52, a GSM radio module 54 and an evaluation device controller 56. The separate evaluation device 50 is provided with an application program which is memorized in the evaluation device controller 56.

The reagent production site 60 is preferably located at the or close to the reagent production facilities. The reagent production site 60 is provided with a production laboratory 80 with a photometer 40' and with an ageing data server 70. The production laboratory photometer 40' can be identical to the analyzer device photometer 40 but can also be a high quality spectral photometer which can simulate different photometer types.

The ageing data server 70 is provided with a database interface 78 which can be a manual keyboard, with the reagent ageing database 76 and with a database controller 74. The database controller 74 is connected, for example via an Internet connection or a GSM network connection, to a radio module 72 which can be a remote GSM antenna.

In intervals of, for example, several weeks a batch/lot of a reagent is produced at the reagent production site 60. The produced reagent 14 is filled into the reagent container bodies 12 which are sealed and provided with the reagent identifier 16. The reagent identifier 16 defines the type of reagent or the chemical test type, and also identifies the reagent batch/lot.

The reagent containers 10 are packed in reagent container packages 20 and are sold and delivered to customers. Some of the reagent containers 10" of that batch/lot remain at the production site 60 and are measured with the photometer 40' in the production laboratory 80 in particular intervals of, for example, one month, with an analyte standard. Based on these photometric results, batch/lot-specific and photometer-type specific ageing correction factors C can be determined which are entered into the reagent ageing database 76 via the database interface 78.

The customer fills a liquid sample, for example a water sample, into the opened reagent container body 12 so that the analyte of the liquid sample reacts with the reagent 14 in a color-changing way. The reagent container 10 is inserted into the photometer chamber 44 of the analyzer device 30 and the chamber lid 46 is closed to avoid any environmental light in the photometer chamber 44.

The analyzer device 30 can be provided with a reagent container rotation means (not shown) to rotate the reagent container 10' in the photometer chamber 44. As soon as the sample liquid 14' together with the reagent completely has been reacted, the photometer controller 36 causes the photometer 42 to provide a photometric measurement to thereby provide a photometric raw measurement value M. The photometer controller 36 links the measurement date MD requested from the time stamp generator 38 to the raw measurement value M. The photometer controller 36 also causes the reagent identifier reader 45 to read the reagent identity R from the reagent identifier 16 and links the reagent identity R with the raw measurement value M.

The photometer controller 36 then sends the own photometer-type identification PT, the raw measurement value M, the reagent identity R and the measurement date D via the wireless data transfer modules 34,52 to the evaluation device 50. The evaluation device controller 56 then sends an ageing data request via the radio modules 54, 72 to the database controller 74 of the ageing data server 70, and in particular sends the reagent identity R and the photometer type identification PT to the data server 70.

The database controller 74 selects the corresponding reagent-specific and photometer-type specific ageing correction factor C and the production date PD back to the evaluation device 50.

The evaluation device controller 56 then corrects the raw measurement value M with the ageing correction factor C and thereby calculates the true measurement value M' in dependency on the reagent age A calculated by subtracting the measurement date MD from the production date PD.

The resulting true measurement value M' is shown at a display (not shown) of the evaluation device 50.

## Claims

1. A photometer arrangement (8) with
a reagent container (10,10') comprising a reagent (14) and being provided with a machine-readable reagent identifier (16),
an analyzer device (30) comprising a photometer (40) for providing a photometric raw measurement value (M), a reagent identifier reader (45) for reading the reagent identifier (16) for providing a reagent identity (R), and a photometer controller (36), **characterised by** further comprising:
a time stamp generator (38) for providing a measurement date (MD),
a reagent ageing database (76) with reagent-identity-specific and age-specific ageing correction factors (C), and
an evaluation device (50) having a data connection with the analyzer device (30), the time stamp generator (38) and the reagent ageing database (76), the evaluation device (50) being configured for calculating the true measurement value by correcting the raw measurement value (M) with the ageing correction factor (C) for the measurement date (D).

2. The photometer arrangement (8) of claim 1, wherein the photometer controller (36) is provided with a photometer type identification (PT) and the reagent-specific ageing correction factors (C) are memorized in the reagent ageing database (76) photometer-type-specific.

3. The photometer arrangement (8) of one of the preceding claims, wherein the evaluation device (50) is provided separately from the analyzer device (30).

4. The photometer arrangement (8) of one of the preceding claims, wherein the reagent ageing database (76) is memorized at an ageing data server (70) being remote from the analyzer device (30) and the evaluation device (50).

5. A method for determining a concentration of an analyte in a liquid sample with a photometer arrangement (8) of one of the preceding claims, with the method steps:
applying a liquid sample into the reagent container (10),
applying the reagent container (10) into the analyzer device (30),
photometric measurement of the reagent container (10') with the photometer (40) to generate a raw measurement value (M),
reading the reagent identity (R) of the reagent identifier (16) with the reagent identifier reader (45) and linking the reagent identity (R) and the measurement date (D) provided by the time stamp generator (38) to the raw measurement value (M),
sending the reagent identity (R) to the reagent ageing database (76) and loading the corresponding reagent-identity-specific and age-specific ageing correction factor (C) to the evaluation device (50),
calculating the true measurement value (M') in the evaluation device (50) by correcting the raw measurement value (M) with the ageing correction factor (C) for the measurement date (D).

## Patentansprüche

1. Eine Photometeranordnung (8) mit
einem Reagenzienbehälter (10, 10'), der ein Reagenz (14) aufweist und mit einem maschinenlesbaren Reagenzidentifikator (16) versehen ist,
einer Analysevorrichtung (30), die ein Photometer (40) zur Bereitstellung eines photometrischen Rohmesswerts (M), einen Reagenzidentifikatorleser (45) zum Lesen des Reagenzidentifikators (16) zur Bereitstellung einer Reagenzidentität (R) und eine Photometersteuerung (36) aufweist, **dadurch gekennzeichnet, dass** sie ferner aufweist:
einen Zeitstempelgenerator (38) zur Bereitstellung eines Messdatums (MD),
eine Reagenzienalterungsdatenbank (76) mit reagenzienidentitätsspezifischen und altersspezifischen Alterungskorrekturfaktoren (C), und
eine Auswertevorrichtung (50), die eine Datenverbindung mit der Analysevorrichtung (30), dem Zeitstempelgenerator (38) und der Reagenzienalterungsdatenbank (76) hat, wobei die Auswertevorrichtung (50) ausgebildet ist, um den wahren Messwert durch Korrektur des Rohmesswerts (M) mit dem Alterungskorrekturfaktor (C) für das Messdatum (D) zu berechnen.

2. Die Photometeranordnung (8) nach Anspruch 1, wobei die Photometersteuerung (36) mit einer Photometertyp-Identifikation (PT) versehen ist und die reagenzienspezifischen Alterungskorrekturfaktoren (C) in der Reagenzienalterungsdatenbank (76) photometertypspezifisch gespeichert sind.

3. Die Photometeranordnung (8) nach einem der vorhergehenden Ansprüche, wobei die Auswertevorrichtung (50) getrennt von der Analysevorrichtung (30) vorgesehen ist.

4. Die Photometeranordnung (8) nach einem der vorhergehenden Ansprüche, wobei die Reagenzienalterungsdatenbank (76) in einem Alterungsdatenserver (70) gespeichert ist, der von der Analysevorrichtung (30) und der Auswertevorrichtung (50) entfernt angeordnet ist.

5. Ein Verfahren zur Bestimmung einer Konzentration eines Analyten in einer flüssigen Probe mit einer Photometeranordnung (8) nach einem der vorhergehenden Ansprüche, mit den Verfahrensschritten:
Einbringen einer flüssigen Probe in den Reagenzienbehälter (10), Einsetzen des Reagenzienbehälters (10) in die Analysevorrichtung (30),
photometrische Messung des Reagenzienbehälters (10') mit dem Photometer (40) zur Erzeugung eines Rohmesswertes (M), Lesen der Reagenzidentität (R) des Reagenzidentifikators (16) mit dem Reagenzidentifikatorleser (45) und Verknüpfen der Reagenzidentität (R) und des vom Zeitstempelgenerator (38) gelieferten Messdatums (D) mit dem Rohmesswert (M),
Senden der Reagenzidentität (R) an die Reagenzalterungsdatenbank (76) und Laden des entsprechenden reagenzidentitätsspezifischen und altersspezifischen Alterungskorrekturfaktors (C) in die Auswertevorrichtung (50), Berechnen des wahren Messwertes (M') in der Auswertevorrichtung (50) durch Korrigieren des Rohmesswertes (M) mit dem Alterungskorrekturfaktor (C) für das Messdatum (D).

## Revendications

1. Un arrangement de photomètre (8) avec
un réservoir de réactif (10, 10') comprenant un réactif (14) et pour lequel est fourni un identificateur de réactif lisible par machine (16),
un appareil d'analyse (30) comprenant un photomètre (40) pour fournir une valeur de mesure photométrique brute (M), un lecteur d'identificateur de réactif (45) pour lire l'identificateur de réactif (16) pour fournir une identité de réactif (R), et un contrôleur de photomètre (36), **caractérisé en ce qu'**il comprend en outre :
un générateur d'horodatage (38) pour fournir une date de mesure (MD), une base de données sur le vieillissement des réactifs (76) contenant des facteurs de correction du vieillissement (C) spécifiques à l'identité du réactif et à l'âge, et
un appareil d'évaluation (50) ayant une connexion de données avec l'appareil d'analyse (30), le générateur d'horodatage (38) et la base de données de vieillissement des réactifs (76), l'appareil d'évaluation (50) étant configuré pour calculer la valeur de mesure réelle en corrigeant la valeur de mesure brute (M) avec le facteur de correction du vieillissement (C) pour la date de mesure (D).

2. L'arrangement de photomètre (8) de la revendication 1, dans lequel le contrôleur de photomètre (36) est fourni avec une identification de type de photomètre (PT) et les facteurs de correction de vieillissement spécifiques au réactif (C) sont mémorisés dans la base de données de vieillissement du réactif (76) spécifique au type de photomètre.

3. L'arrangement photomètre (8) de l'une des revendications précédentes, dans lequel le dispositif d'évaluation (50) est fourni séparément de l'appareil d'analyse (30).

4. L'arrangement de photomètre (8) de l'une des revendications précédentes, dans lequel la base de données de vieillissement des réactifs (76) est mémorisée sur un serveur de données de vieillissement (70) distant de l'appareil d'analyse (30) et de l'appareil d'évaluation (50).

5. Méthode de détermination d'une concentration d'un analyte dans un échantillon liquide avec un arrangement photomètre (8) de l'une des revendications précédentes, selon les marches de la méthode :
appliquer un échantillon liquide dans le réservoir de réactif (10),
appliquer le réservoir de réactif (10) dans l'appareil d'analyse (30),
mesure photométrique du réservoir de réactif (10') avec le photomètre (40) pour générer une valeur de mesure brute (M),
lecture de l'identité du réactif (R) de l'identificateur de réactif (16) avec le lecteur d'identificateur de réactif (45) et liaison de l'identité du réactif (R) et de la date de mesure (D) fournie par le générateur d'horodatage (38) à la valeur de mesure brute (M),
envoyer l'identité du réactif (R) à la base de données sur le vieillissement des réactifs (76) et charger le facteur de correction du vieillissement (C) correspondant, spécifique à l'identité du réactif et spécifique à l'âge, dans l'appareil d'évaluation (50),
calculer la valeur de mesure réelle (M') dans l'appareil d'évaluation (50) en corrigeant la valeur de mesure brute (M) avec le facteur de correction du vieillissement (C) pour la date de mesure (D).
